# EUROPÄISCHE PATENTANMELDUNG

(11) **EP 1 563 979 A1**
(43) Veröffentlichungstag der Anmeldung: **17.08.2005**
(21) Anmeldenummer: 05002643.4
(22) Anmeldetag: 09.02.2005
(51) Int. Cl.: B29C 45/14, B29C 33/12, B29C 45/33

(54) **Verfahren und Vorrichtung zum Herstellen eines Verbundbauteiles**

(30) Priorität: 16.02.2004 DE 102004008450
(71) Anmelder: Prettl, Rolf, 72072 Tübingen (DE)
(72) Erfinder: Kuttler, Werner, 72116 Mössingen (DE); Borst, Peter, 88527 Unlingen (DE); Dettinger, Jürgen, 72669 Unterensingen (DE)
(74) Vertreter: Steil, Christian, Dipl.-Ing.

(57) **Zusammenfassung**

Es wird vorgeschlagen ein Verfahren zum Herstellen eines Sinterwerkstoff/Kunststoff-Verbundbauteiles mit den Schritten:
- Einlegen eines Sinterwerkstoff-Bauteiles (22) in eine Spritzgussvorrichtung (10), die ein Unterwerkzeug (12), ein Oberwerkzeug (14) und wenigstens einen Schieber (16) aufweist,
   - elastisches Andrücken des Schiebers (16) an das eingelegte Sinterwerkstoff-Bauteil (22),
- Zusammenfahren von Unterwerkzeug (12) und Oberwerkzeug (14), wobei der elastisch angedrückte Schieber (16) dazwischen eingeklemmt wird, um die Position des Schiebers (16) zu fixieren, und wobei ein Formhohlraum (20) gebildet wird, in dem das Sinterwerkstoff-Bauteil (22) angeordnet ist, und
- Einspritzen von Kunststoff in den Formhohlraum (20), so dass das Sinterwerkstoff/Kunststoff-Verbundbauteil gebildet wird. (Figur 2)

## Beschreibung

Die vorliegende Erfindung betrifft ein Verfahren zum Herstellen eines Sinterwerkstoff/Kunststoff-Verbundbauteiles.

Ferner betrifft die vorliegende Erfindung eine Vorrichtung zur Herstellung eines Sinterwerkstoff/Kunststoff-Verbundbauteiles, insbesondere zur Durchführung des genannten Verfahrens, wobei die Vorrichtung ein Unterwerkzeug, ein Oberwerkzeug und wenigstens einen Schieber aufweist, die gemeinsam einen Formhohlraum zum Einlegen eines Sinterwerkstoff-Bauteiles definieren.

Unter einem Sinterwerkstoff/Kunststoff-Verbundbauteil (im Folgenden kurz Verbundbauteil) soll im Folgenden ein Werkstück verstanden werden, bei dem ein Sinterwerkstoff-Bauteil mit einer Kunststoffmasse in Verbindung gebracht wird, die anschließend form- und kraftschlüssig an dem Sinterwerkstoff-Bauteil befestigt ist (nach dem Aushärten des Kunststoffes). Dabei soll es möglich sein, ein oder mehrere weitere Bauteile aus beliebigem anderen Material in diesen Prozess mit einzubeziehen, so dass auch das weitere Bauteil kraft- und/oder formschlüssig in den Verbund von Sinterwerkstoff-Bauteil und Kunststoff mit aufgenommen wird.

Unter einem Sinterwerkstoff-Bauteil wird insbesondere ein Sintermetall-Bauteil verstanden; es kann sich jedoch auch um ein Sinterkeramik-Bauteil o.ä. handeln.

Ein typisches Verfahren zum Herstellen eines Verbundbauteiles besteht darin, den Kunststoff im Rahmen eines Gießprozesses drucklos mit dem Sinterwerkstoff-Bauteil (und ggf. einem oder mehreren weiteren Bauteilen) zu verbinden. Das drucklose Gießen hat den Vorteil, dass trotz der Sprödigkeit des Sinterwerkstoff-Bauteiles ein Verbundbauteil hergestellt werden kann, ohne Gefahr zu laufen, dass das Sinterwerkstoff-Bauteil hierbei zerstört wird.

Ein solcher druckloser Gießprozess hat jedoch den Nachteil, dass er vergleichsweise langsam ist und keine hohe Prozesssicherheit darstellt. Ferner ist nicht ausgeschlossen, dass Hohlräume nicht vollständig ausgefüllt werden (Lunkerbildung).

Bei der Herstellung von Großserienteilen wird daher generell das Spritzgussverfahren bevorzugt. Dieses Verfahren wird jedoch bislang in Verbindung mit Sinterwerkstoff-Bauteilen nicht angewandt, da der beim Spritzguss vorherrschende Druck die Tendenz hat, das Sinterwerkstoff-Bauteil zu zerstören.

Bei der Anwendung des Spritzgussverfahrens wird ein Verbundbauteil daher generell durch Kombination eines nicht gesinterten Kompaktstahl-Bauteiles und Kunststoff (und ggf. einem oder mehreren weiteren Bauteilen) hergestellt.

Beispielsweise ist es zur Herstellung von Einspritzventilen für moderne Dieselkraftstoff-Verbrennungsmotoren bekannt, ein Verbundbauteil auf der Grundlage dieses Verfahrens herzustellen.

Hierbei wird ein Magnettopf aus einem Kompaktstahl zunächst hochpräzise hergestellt. Dabei erfolgen unter anderem ein Schleifschritt und ein Erodierschritt. Aufgrund der generell unterlegenen magnetischen Eigenschaften von Kompaktstahl kann es daher notwendig sein, komplexe Einschnitte vorzusehen, um die magnetischen Eigenschaften des Magnettopfes zu verbessern.

Ferner wird ein Spulen-Bauteil hergestellt, bei dem eine Spule um einen Kunststoff-Spulenkörper gewickelt ist, wobei zwei Anschlussstifte formschlüssig in den Spulenkörper eingegossen, eingespritzt oder eingesteckt sind. Die Anschlussstifte sind dann mit Enden der gewickelten Spule elektrisch verbunden.

Dieses Spulen-Bauteil wird in eine Ringöffnung des Magnettopfes eingesetzt, wobei die Anschlussstifte durch geeignete Durchführungen hindurchgeführt werden, so dass sie von der gegenüberliegenden Seite vorstehen.

Anschließend wird diese Anordnung in ein Spritzgusswerkzeug eingesetzt und die verbleibenden Hohlräume zwischen Spulen-Bauteil und Magnettopf werden mit Kunststoff ausgespritzt, um das Spulen-Bauteil unverlierbar in dem Magnettopf aufzunehmen. Anschließend kann ggf. noch eine Endbearbeitung erfolgen (Entgraten, ggf. Schleifen, etc.).

Ein derartiges Kompaktstahl/Kunststoff-Verbundbauteil ist als Stator für ein Magnetventil verwendbar, das z.B. Teil eines Pumpe-Düse-Einspritzsystems für moderne Dieselkraftstoff-Verbrennungsmotoren ist. Dabei wird eine Magnetventilnadel durch eine zentrale Ausnehmung des Magnettopfes hindurchgeführt und kann bei Bestromung des Spulen-Bauteiles in axialer Richtung verstellt werden.

Der Magnettopf aus dem Kompaktstahl ist vergleichsweise teuer in der Herstellung.

Es ist demzufolge die Aufgabe der vorliegenden Erfindung, ein Verfahren zum Herstellen eines Verbundbauteiles anzugeben, mit dem sich das Verbundbauteil zu geringeren Kosten herstellen lässt.

Ferner ist es eine Aufgabe der Erfindung, eine Vorrichtung zur Herstellung eines solchen Bauteiles anzugeben.

Diese Aufgabe wird durch ein Verfahren zum Herstellen eines Sinterwerkstoff/Kunststoff-Verbundbauteiles mit den folgenden Schritten gelöst:
- Einlegen eines Sinterwerkstoff-Bauteiles in eine Spritzgussvorrichtung, die ein Unterwerkzeug, ein Oberwerkzeug und wenigstens einen Schieber aufweist,
- elastisches Andrücken des Schiebers an das eingelegte Sinterwerkstoff-Bauteil,
- Zusammenfahren von Unterwerkzeug und Oberwerkzeug, wobei der elastisch angedrückte Schieber dazwischen eingeklemmt wird, um die Position des Schiebers zu fixieren, und wobei ein Formhohlraum gebildet wird, in dem das Sinterwerkstoff-Bauteil angeordnet ist, und
- Einspritzen von Kunststoff in den Formhohlraum, so dass das Sinterwerkstoff/Kunststoff-Verbundbauteil gebildet wird.

Ferner wird die obige Aufgabe gelöst durch die eingangs genannte Vorrichtung zur Herstellung eines Sinterwerkstoff/Kunststoff-Verbundbauteiles, wobei die Vorrichtung eine Spritzgussvorrichtung ist und wobei der Schieber in Richtung hin zu dem Formhohlraum elastisch vorgespannt und in Bezug auf das Unter- und das Oberwerkzeug so gelagert ist, dass die Lage des Schiebers anliegend an dem Sinterwerkstoff-Bauteil durch Zusammendrücken der Werkzeuge fixiert werden kann.

Mit dem erfindungsgemäßen Verfahren bzw. der erfindungsgemäßen Spritzgussvorrichtung ist es möglich, ein Verbundbauteil herzustellen, das kostengünstig herstellbar ist.

Zum einen ist ein Sinterwerkstoff-Bauteil preisgünstiger als ein Kompaktstahl-Bauteil, das erst durch aufwändige Arbeitsschritte die richtige Formgebung erhält. Ferner hat ein Sinterwerkstoff-Bauteil in der Regel deutlich günstigere magnetische Eigenschaften als ein Kompaktstahl-Bauteil, so dass sich Verbundbauteile mit günstigen magnetischen Eigenschaften herstellen lassen.

Durch die Maßnahme, den Schieber an das in den Formhohlraum eingelegte Sinterwerkstoff-Bauteil elastisch anzudrücken, werden die relativ großen Toleranzen von Sinterwerkstoff-Bauteilen jeweils ausgeglichen. Die optimal, unmittelbar an dem Sinterwerkstoff-Bauteil anliegende Position des Schiebers wird anschließend durch Zusammenfahren von Unter- und Oberwerkzeug fixiert. Erst hiernach wird der eigentliche Spritzgussvorgang durchgeführt.

Durch die Tatsache, dass der Schieber unmittelbar an dem Sinterwerkstoff-Bauteil anliegt und in dieser Lage durch das Ober- und das Unterwerkzeug fixiert ist, besteht trotz des vergleichsweise hohen Spritzgussdruckes keine Gefahr, dass das Sinterwerkstoff-Bauteil bei diesem Prozess beschädigt wird.

Es hat sich nämlich gezeigt, dass bisherige Versuche zur Herstellung eines Sinterwerkstoff/Kunststoff-Verbundbauteiles aus folgenden Gründen gescheitert sind. Bislang werden Spritzgussvorrichtungen so aufgebaut, dass ein Schieber zur seitlichen Begrenzung des Formhohlraumes in eine feste, durch einen Anschlag definierte Position verschoben wird, um den Formhohlraum zu bilden. Aufgrund der vergleichsweise großen Toleranzen von Sinterwerkstoff-Bauteilen besteht die Gefahr, dass der so gebildete Formraum entweder zu klein ist (dann wird das Sinterwerkstoff-Bauteil durch den Schieber beschädigt), oder zu groß ist (dann wird das Sinterwerkstoff-Bauteil durch den Druck der eingespritzten Kunststoffmasse zerstört).

Durch die Maßnahme, den Schieber unmittelbar an das Sinterwerkstoff-Bauteil anliegend elastisch "anzudocken", werden diese Toleranzprobleme ausgeglichen. Die Gefahr einer Zerstörung des Sinterwerkstoff-Bauteiles wird vermieden.

Die Aufgabe wird demzufolge vollkommen gelöst.

Es versteht sich, dass immer dann, wenn im vorliegenden Zusammenhang von Sinterwerkstoff-Bauteil die Rede ist, entweder ein Sinterwerkstoff-Bauteil allein oder (wie in dem oben genannten Beispiel des Magnetventils) eine Anordnung aus einem Sinterwerkstoff-Bauteil und einem weiteren Bauteil zu verstehen ist.

Von besonderem Vorzug ist es bei dem erfindungsgemäßen Verfahren, wenn der Schieber während des elastischen Andrückvorganges bis zur Kontaktierung des Sinterwerkstoff-Bauteiles oder bis kurz davor durch eine Steuerfläche geführt wird, so dass der Schieber mit einer geringen Geschwindigkeit an das eingelegte Sinterwerkstoff-Bauteil herangeführt wird.

Durch diese Maßnahme wird vermieden, dass der Schieber aufgrund der elastischen Vorspannung mit einer zu hohen Geschwindigkeit gegen das eingelegte Sinterwerkstoff-Bauteil prallt. Hierdurch werden Beschädigungen des Sinterwerkstoff-Bauteiles in dieser Phase des erfindungsgemäßen Verfahrens vermieden.

Dabei ist es von besonderem Vorzug, wenn das langsame Heranfahren des Schiebers gleichzeitig mit dem Zusammenfahren von Unterwerkzeug und Oberwerkzeug erfolgt.

Dadurch kann der Prozess zeitlich optimiert durchgeführt werden. Auch ist es möglich, das Heranfahren des Schiebers und das Zusammenfahren der Werkzeuge mechanisch zu koppeln.

Gemäß einer weiteren bevorzugten Ausführungsform wird der Schieber vor dem Einlegen des Sinterwerkstoff-Bauteiles in einer zurückgezogenen Position eingerastet gehalten.

Hierdurch wird eine definierte Position des Schiebers eingerichtet, bei der der Schieber von dem Formhohlraum hinreichend beabstandet ist, um das Sinterwerkstoff-Bauteil einzulegen.

Auch ist es bevorzugt, wenn der Schieber von Oberwerkzeug oder Unterwerkzeug gegen einen Abschnitt des anderen Werkzeuges gepresst wird.

Hierdurch erfolgt ein unmittelbares Fixieren des Schiebers zwischen dem Unter- und dem Oberwerkzeug. Der Schieber kann folglich in der an dem Sinterwerkstoff-Bauteil anliegenden Position sicher gehalten werden.

Dabei ist es von besonderem Vorzug, wenn der Gegenabschnitt des anderen Werkzeuges durch einen an dem betreffenden Werkzeug festgelegten Einsatz aus einem elastischeren Material als das Material des Oberwerkzeuges bzw. des Unterwerkzeuges gebildet ist.

Während die Werkzeuge in der Regel aus einer hochfesten Stahllegierung hergestellt sind, ist der Einsatz aus einem etwas elastischeren Material hergestellt. Der Einsatz besteht jedoch auch generell aus einem Metall, beispielsweise aus einer Stahllegierung mit einer Härte bzw. Elastizität, die vergleichbar ist mit jener von Kupfer. Hierdurch wird erreicht, dass bei dem Zusammenpressen von Ober- und Unterwerkzeug und dem dabei erfolgenden Fixieren des Schiebers keine Spannungsüberhöhungen auftreten, die beispielsweise zu Lagerschäden oder ähnlichem führen können.

Gemäß einer weiteren bevorzugten Ausführungsform ist die Materialpaarung von Gegenabschnitt und Schieber so gewählt, dass eine hohe Haftreibung erzielt wird.

Demzufolge kann auch bei einem vergleichsweise geringen Anpressdruck von Unter- bzw. Oberwerkzeug eine sichere Lagefixierung des elastisch angedrückten Schiebers erzielt werden.

Ferner ist es vorteilhaft, wenn der Gegenabschnitt unter einem Winkel kleiner 10°, insbesondere kleiner 7°, in Richtung hin zu dem Formhohlraum geneigt ist und wenn der Schieber an seiner entsprechenden Anlagefläche entsprechend schräg ausgebildet ist.

Durch diese Maßnahme wird erreicht, dass zwischen dem Gegenabschnitt und der Anlagefläche des Schiebers eine Art Selbsthemmung eintritt, sobald der Schieber, bereits mit einer vergleichsweise geringen Kraft, zwischen Oberwerkzeug und Unterwerkzeug zusammengedrückt wird. Selbst bei dem Auftreten sehr hoher Spritzgussdrücke im Inneren des Formhohlraumes (größer 1.000 bar) kann so sicher gewährleistet werden, dass der Schieber in seiner Position fixiert wird.

Ein solch hoher Betriebsdruck bei dem Spritzgussverfahren ist bei besonders hoch beanspruchten Teilen erforderlich, um einen sicheren Prozess einzurichten.

Ferner ist es vorteilhaft, wenn der Schieber an dem einen der zwei Werkzeuge verschieblich gelagert ist.

Hierbei kann auf eine Lagerung unabhängig von dem Oberwerkzeug und dem Unterwerkzeug verzichtet werden, was in der Regel zu einem deutlich komplexeren Aufbau führen würde. Besonders bevorzugt ist es dabei, wenn der Schieber an dem Werkzeug verschieblich gelagert ist, das seinerseits in Bezug auf das andere Werkzeug beweglich ausgebildet ist.

Hierdurch ist der Formhohlraum bei geöffneten Werkzeugen weitgehend freigelegt, so dass ein automatisiertes Einlegen des Sinterwerkstoff-Bauteiles auf einfache Weise möglich ist.

Von besonderem Vorzug ist es ferner, wenn der Schieber eine Ausnehmung aufweist, durch die hindurch ein Steuerzapfen führbar ist.

Diese Maßnahme ermöglicht, dass der Schieber durch den Steuerzapfen in einer zurückgezogenen Position gehalten wird, wenn die Werkzeuge geöffnet sind.

Von besonderem Vorzug ist es dabei, wenn eine relative Bewegung zwischen dem Steuerzapfen und dem Schieber in Abhängigkeit von der Relativbewegung zwischen Oberwerkzeug und Unterwerkzeug erfolgt.

Dies ermöglicht, dass sich die Relativbewegungen zeitlich überschneiden. Somit lassen sich kurze Taktzeiten erzielen.

Ferner ist es vorteilhaft, wenn der Steuerzapfen elastisch vorgespannt ist und beim Zusammenfahren der Werkzeuge von einem Stößel gegen die Vorspannrichtung verschoben wird.

Der Stößel kann beispielsweise an dem Werkzeug vorgesehen sein, an dem der Schieber nicht gelagert ist. Beim Zusammenfahren der Werkzeuge hält der Stößel den Steuerzapfen dann quasi fest, während sich die Werkzeuge aufeinander zu bewegen. Hierdurch wird gleichzeitig eine Relativbewegung zwischen dem Steuerzapfen und dem Schieber eingerichtet.

Gemäß einer weiteren bevorzugten Ausführungsform wird der Schieber in einer zurückgezogenen Position durch einen Rasteingriff des Steuerzapfens an einer Kante der Ausnehmung gehalten.

Der Rasteingriff ist dabei so ausgelegt, dass er weder durch die elastische Vorspannung des Schiebers, noch durch die Vorspannung des Steuerzapfens gelöst werden kann.

Das Lösen der Rastverbindung kann beispielsweise durch den oben genannten Stößel erfolgen.

Ferner ist es vorteilhaft, wenn die Geschwindigkeit des Einfahrens des Schiebers in Richtung hin zum Formhohlraum durch eine Steuerfläche des Steuerzapfens eingerichtet ist.

Genauer gesagt erfolgt die Geschwindigkeitseinstellung durch das Zusammenwirken zwischen Flächen des Steuerzapfens einerseits und des Schiebers (bzw. einer Ausnehmung des Schiebers) andererseits.

Durch diese Maßnahme kann vermieden werden, dass der Schieber aufgrund der elastischen Vorspannung bei Lösen der Rastung zu schnell in Richtung hin zu dem Formhohlraum vorschnellt, was eine Zerstörung des Sinterwerkstoff-Bauteiles oder ein Verklemmen der Spritzgussvorrichtung zur Folge haben könnte.

Insgesamt ist es ferner vorteilhaft, wenn der Formhohlraum zur Bildung des Sinterwerkstoff/Kunststoff-Verbundbauteiles in seitlicher Richtung durch eine Mehrzahl von Schiebern definiert wird, die sämtlich elastisch in Richtung hin zu dem Formhohlraum vorgespannt sind.

Dies ermöglicht die Schaffung eines weitgehend frei definierbaren Formhohlraumes in Richtung der Bewegungsrichtung der Schieber. Ferner kann durch eine größere Anzahl von Schiebern vermieden werden, dass Spannungsspitzen oder Kerbspannungen im Bereich zwischen der Anlagefläche zwischen jeweiligem Schieber und Sinterwerkstoff-Bauteil auftreten.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine schematische Draufsicht auf eine erfindungsgemäße Spritzgussvorrichtung zur Durchführung des erfindungsgemäßen Verfahrens;
- Figur 2: eine schematische Seitenansicht der Spritzgussvorrichtung der Figur 1;
- Figur 3: eine Querschnittsansicht eines SinterwerkstoffBauteiles in Form eines Magnettopfes für ein Magnetventil;
- Figur 4: eine Querschnittsansicht eines Spulen-Bauteils für das Magnetventil, wobei das Spulen-Bauteil in eine Ringausnehmung des Magnettopfes der Figur 3 einsetzbar ist;
- Figur 5: eine schematische Schnittansicht durch eine weitere Ausführungsform einer erfindungsgemäßen Spritzgussvorrichtung zur Durchführung des erfindungsgemäßen Herstellungsverfahrens;
- Figur 6: eine Draufsicht auf die Schieberanordnung der Spritzgussvorrichtung der Figur 5;
- Figur 7: eine Darstellung eines Schiebers und eines zugeordneten Steuerzapfens der Spritzgussvorrichtung der Figuren 5 und 6 in einem Zustand vor dem Zusammenfahren von Unterwerkzeug und Oberwerkzeug; und
- Figur 8: eine der Figur 7 vergleichbare Ansicht zu einem späteren Zeitpunkt während des Zusammenfahrens der Werkzeuge.

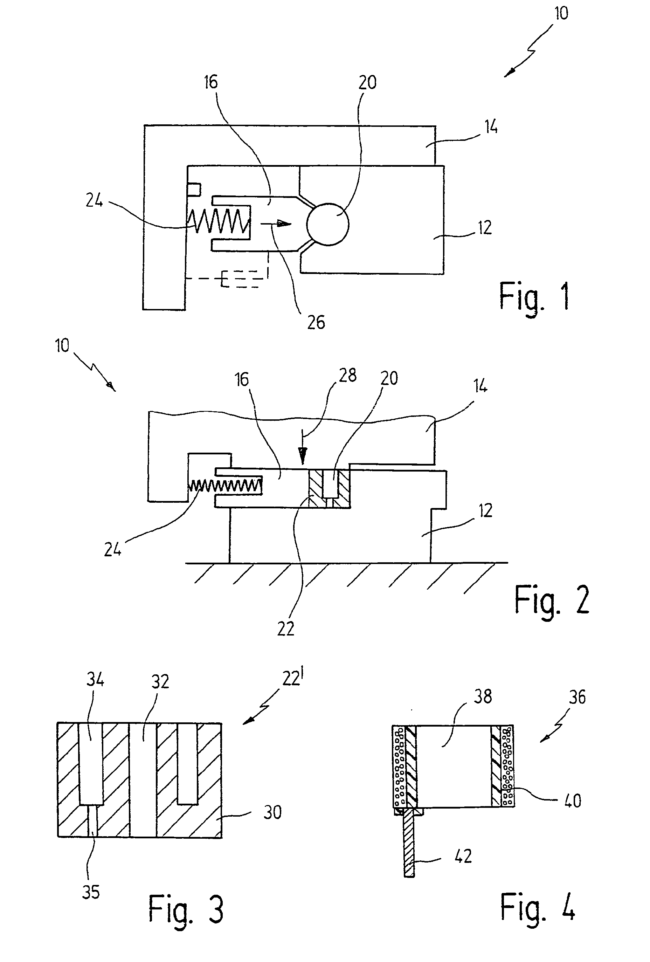

In den Figuren 1 und 2 ist eine erste Ausführungsform der erfindungsgemäßen Spritzgussvorrichtung generell mit 10 bezeichnet.

Die Spritzgussvorrichtung 10 weist ein Unterwerkzeug 12 und ein Oberwerkzeug 14 auf. Das Unterwerkzeug 12 ist bei dieser Ausführungsform unbeweglich ausgebildet und ist beispielsweise fest am Boden verankert.

Das Oberwerkzeug 14 ist in vertikaler Richtung relativ zu dem Unterwerkzeug 12 beweglich gelagert.

Die Spritzgussvorrichtung 10 weist ferner einen in horizontaler Richtung beweglich gelagerten Schieber 16 auf.

Das Unterwerkzeug 12, das Oberwerkzeug 14 und der Schieber 16 bilden gemeinsam einen Formhohlraum 20, der im vorliegenden Ausführungsbeispiel etwa zylindrisch ausgebildet ist.

Dabei ist, wie es insbesondere Figur 1 zu entnehmen ist, die Zylindermantelfläche zum Teil durch das Unterwerkzeug 12 gebildet. Ein weiterer Teil der Mantelfläche des zylindrischen Formhohlraumes 20 ist durch einen vorderen Bereich des Schiebers 16 gebildet.

Die Spritzgussvorrichtung 10 dient zum Herstellen eines Sinterwerkstoff/Kunststoff-Verbundbauteiles (im Folgenden kurz "Verbundbauteil"). Unter einem derartigen Verbundbauteil ist ein Bauteil zu verstehen, das durch form- und/oder kraftschlüssige Verbindung eines Sinterwerkstoff-Bauteiles mit Kunststoff entsteht. Im vorliegenden Fall wird der Kunststoff im Wege des Spritzgussverfahrens mit dem Sinterwerkstoff-Bauteil verbunden. Ferner kann das Verbundbauteil ein weiteres Bauteil aufweisen, das im Wege des Spritzgussverfahrens form- und/oder kraftschlüssig mit dem Sinterwerkstoff-Bauteil bzw. dem Kunststoff verbunden wird. Bei dem zusätzlichen Bauteil kann es sich selbst wiederum um ein Verbundbauteil handeln.

Der Schieber 16 ist in horizontaler Richtung mittels einer Feder 24 (oder einer anderen elastischen Einrichtung) elastisch in Richtung hin zu dem Formhohlraum 20 vorgespannt.

Durch diese elastische Vorspannung legt sich der Schieber 16 an ein in den Formhohlraum 20 eingelegtes Sinterwerkstoff-Bauteil 22 an, und zwar mit einer bestimmten Andruckkraft 26. Die Andruckkraft 26 ist so zu wählen, dass der Schieber 16 an das Sinterwerkstoff-Bauteil 22 angedrückt wird, so dass ein Toleranzausgleich stattfindet. Andererseits ist die Andruckkraft 26 so zu wählen, dass das relativ spröde Sinterwerkstoff-Bauteil 22 nicht zerstört wird.

Sobald der Schieber 16 an das in den Formhohlraum 20 eingelegte Sinterwerkstoff-Bauteil 22 elastisch angedrückt ist, wird das Oberwerkzeug 14 auf das Unterwerkzeug 12 abgesenkt. Hierdurch wird der Formhohlraum 20 auch nach oben hin abgeschlossen. Zum anderen wird der Schieber 16 zwischen dem Unterwerkzeug 12 und dem Oberwerkzeug 14 eingeklemmt und hierdurch in seiner Position fixiert.

Das Oberwerkzeug 14 lastet dabei mit einer bestimmten Presskraft 28 auf dem Schieber 16. Die Presskraft 28 ist hinreichend, um zu vermeiden, dass der Schieber 16 aufgrund des Spritzgussdruckes beim Einspritzen vom Kunststoff in den Formhohlraum 20 verschoben wird.

Hierdurch wird gewährleistet, dass der Schieber 16 das Sinterwerkstoff-Bauteil 22 während des eigentlichen Spritzgussvorganges "abstützt". Hierdurch werden Verformungen des Sinterwerkstoff-Bauteil 22 vermieden, die aufgrund der spröden Materialeigenschaften zu einem Bruch führen könnten.

Zu beachten ist, dass der Druck im Inneren des Formhohlraumes 20 während des Spritzgussvorganges im Bereich von 1.000 bar oder mehr liegen kann. Die Presskraft 28 muss demzufolge signifikant sein, um zu gewährleisten, dass der Schieber 16 aufgrund dieses Betriebsdruckes seine Position nicht verändert. Dies kann unterstützt werden durch Maßnahmen wie geeignete Auswahl der Materialpaarungen, durch Oberflächenbehandlung an den Kontaktstellen zwischen den Werkzeugen 12, 14 und dem Schieber 16, etc.

Bei der Ausführungsform der Figuren 1 und 2 ist der Schieber 16 an dem Oberwerkzeug 14 gelagert und dessen Feder 24 stützt sich an dem Oberwerkzeug 14 ab. Es versteht sich jedoch, dass der Schieber 16 generell auch an dem Unterwerkzeug 12 gelagert und abgestützt sein könnte. Auch ist es generell möglich, für die Lagerung und die Abstützung des Schiebers 16 Mittel vorzusehen, die sowohl von dem Unterwerkzeug 12 als auch dem Oberwerkzeug 14 unabhängig sind.

In Figur 2 ist ferner zu erkennen, dass das Sinterwerkstoff-Bauteil 22 eine innere Ausnehmung aufweist, in die Kunststoff während des Spritzgussprozesses eingespritzt wird. Demzufolge wirkt der Spritzguss-Betriebsdruck in radialer Richtung (horizontal) nach außen. Somit dient der Schieber 16 zum unmittelbaren Abstützen des Sinterwerkstoff-Bauteiles 22 in radialer Richtung. Generell ist es jedoch auch denkbar, dass ein Schieber 16 radial innen an einem Sinterwerkstoff-Bauteil angreift, um einen Betriebsdruck abzustützen, der radial nach außen auf das Sinterwerkstoff-Bauteil 22 wirkt.

In den Figuren 3 und 4 sind die Bestandteile eines Sinterwerkstoff/Kunststoff-Verbundbauteiles dargestellt, das bevorzugt mit dem erfindungsgemäßen Verfahren bzw. der erfindungsgemäßen Spritzgussvorrichtung 10 hergestellt wird.

Das Verbundbauteil weist zum einen ein Sinterwerkstoff-Bauteil 22' auf, das in Figur 3 dargestellt ist. Das Sinterwerkstoff-Bauteil 22' ist als Magnettopf 30 für den Stator eines Magnetventils ausgebildet. Der Magnettopf 30 ist generell zylindrisch ausgebildet und weist eine zentrale durchgehende Ausnehmung 32 auf. Die Ausnehmung 32 ist dazu ausgelegt, einen Aktor (z.B. Ventilnadel) des Magnetventils aufzunehmen.

Das Sinterwerkstoff-Bauteil 22' weist ferner eine Ringausnehmung 34 auf, die konzentrisch zu der zentralen Ausnehmung 32 ausgerichtet ist. Die Ringausnehmung erstreckt sich nicht über die gesamte axiale Länge des Magnettopfes 30.

Ferner sind in dem Magnettopf 30 zwei Durchführungen 35 vorgesehen, die sich vom Boden der Ringausnehmung 34 hin zu der gegenüberliegenden Stirnseite des Magnettopfes 30 erstrecken. Von den zwei Durchführungen 35 ist in Figur 3 nur eine dargestellt.

Figur 4 zeigt ein elektrisches Spulenelement 36. Das Spulenelement 36 weist einen etwa ringförmigen Kunststoffkörper 38 auf, um den eine Spule 40 gewickelt ist. Ferner weist das Spulenelement 36 zwei Kontaktstifte 42 auf (von denen in Figur 4 nur einer dargestellt ist). Die Kontaktstifte 42 erstrecken sich von dem Kunststoffkörper 38 in axialer Richtung nach unten und sind mit entgegengesetzten Enden der Spule 40 elektrisch verbunden.

Man erkennt aus einer Zusammenschau der Figuren 3 und 4, dass das Spulenelement 36 in die Ringausnehmung 34 einsetzbar ist, wobei die Kontaktstifte 42 durch die Durchführungen 35 hindurchgeführt werden, so dass die Kontaktstifte 42 gegenüber der zugeordneten Stirnseite des Magnettopfes 30 hervorstehen.

Um das Spulenelement 36 sicher und unverlierbar an dem Magnettopf 30 zu befestigen, wird das Spulenelement 36 mittels des erfindungsgemäßen Verfahrens in dem Magnettopf 30 verspritzt.

Mit anderen Worten wird die Anordnung aus dem Magnettopf 30 (Sinterwerkstoff-Bauteil 22') und dem darin eingesetzten Spulenelement 36 in den Formhohlraum 20 einer erfindungsgemäßen Spritzgussvorrichtung eingesetzt (beispielsweise gemäß Figuren 1 und 2). Anschließend wird ein Schieber 26 elastisch von außen an den Magnettopf 30 angedrückt. Die Lage des Schiebers 16 wird in diesem Zustand fixiert, indem die Werkzeuge 12, 14 aufeinander zu bewegt werden. Anschließend erfolgt der eigentliche Spritzgussvorgang, bei dem Hohlräume zwischen dem Spulenkörper 36 und dem Magnettopf 30 unter Druck komplett ausgefüllt werden. Ferner können hierbei noch Ansätze oder ähnliches angeformt werden, die gegenüber dem Magnettopf 30 vorstehen und beispielsweise die Kontaktstifte 42 gegenüber einem Abbiegen abstützen.

Das so hergestellte Verbundbauteil dient dann als Stator für ein Magnetventil. Dabei ist die Spulenanordnung 36 für eine lange Lebensdauer (auch bei hohen Vibrationen) betriebssicher an dem Magnettopf 30 festgelegt.

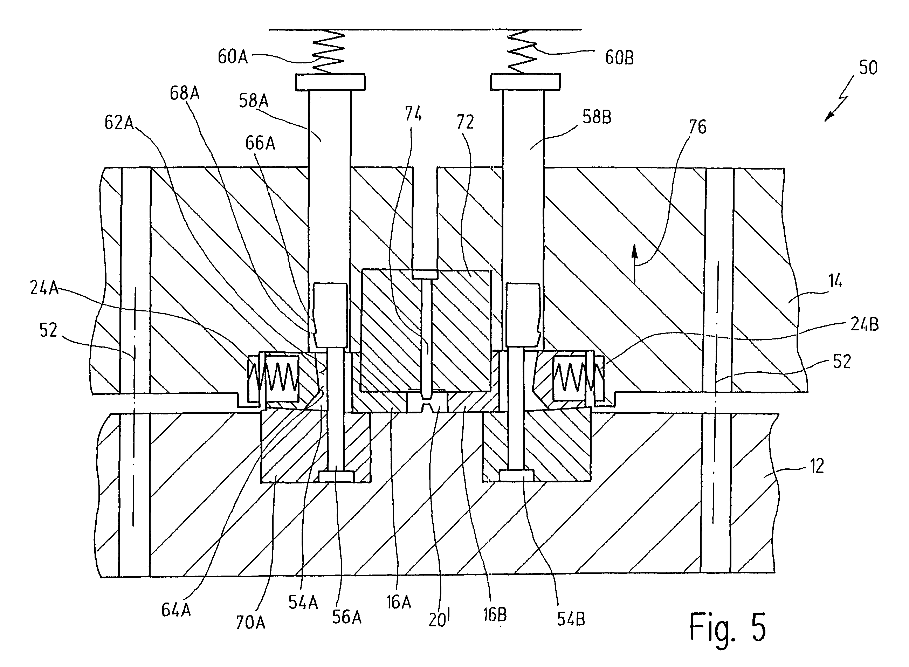

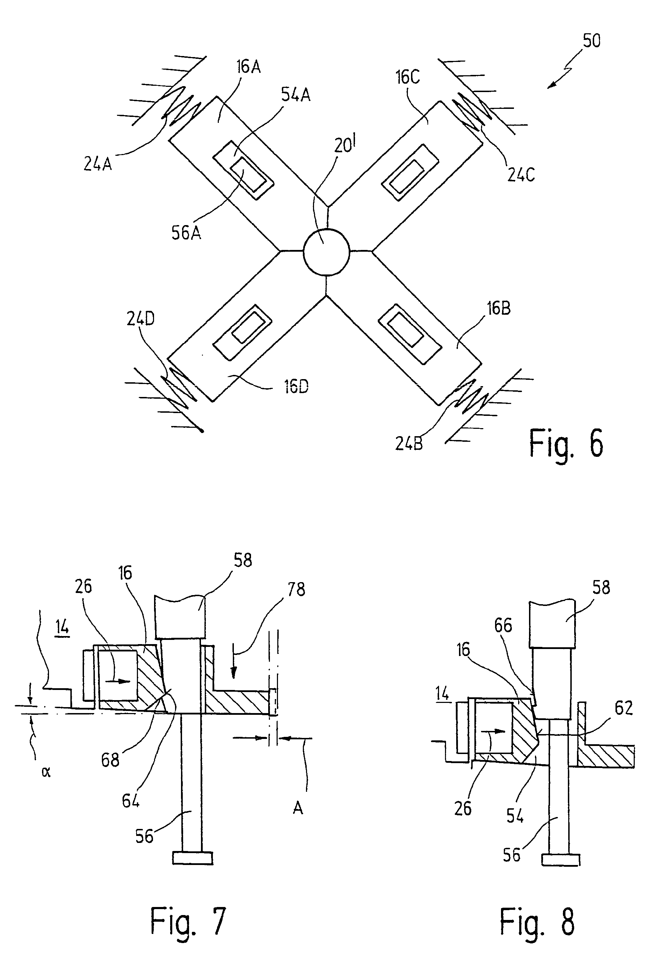

In den Figuren 5 und 6 ist eine weitere Ausführungsform einer erfindungsgemäßen Spritzgussvorrichtung generell mit 50 bezeichnet.

Die Spritzgussvorrichtung 50 ist vom Prinzip her ähnlich aufgebaut wie die Spritzgussvorrichtung 10 der Figuren 1 und 2 und arbeitet nach denselben Funktionsprinzipien. Auch wird dem Grunde nach das gleiche Spritzgussverfahren angewandt. Demzufolge sind einander entsprechende Elemente mit gleichen bzw. einander entsprechenden Bezugsziffern versehen. Im Folgenden wird nur auf die Unterschiede der zwei Spritzgussvorrichtungen 10, 50 eingegangen. Die Beschreibung der Spritzgussvorrichtung 10 soll ergänzend auch für die Spritzgussvorrichtung 50 gelten.

Die Spritzgussvorrichtung 50 weist ein statisches Unterwerkzeug 12 und ein vertikal hierzu bewegliches Oberwerkzeug 14 auf. Das Oberwerkzeug 14 ist relativ zu dem Unterwerkzeug 12 entlang von Führungsachsen bewegbar, die in Figur 5 schematisch mit 52 bezeichnet sind.

Wie es insbesondere in Figur 6 zu ersehen ist, weist die Spritzgussvorrichtung 50 vier Schieber 16A, 16B, 16C, 16D auf, die in der Draufsicht kreuzförmig angeordnet sind. Die Schieber 16A bis 16D umgrenzen den Zylindermantel eines generell zylindrisch ausgebildeten Formhohlraumes 20'. Ein in den Formhohlraum 20' eingelegtes Sinterwerkstoff-Bauteil (beispielsweise der Magnettopf 30 mit dem eingesetzten Spulenelement 36) wird demzufolge in radialer Richtung allseits durch die vier Schieber 16A bis 16D umgrenzt.

Die vier Schieber 16A bis 16D sind in horizontaler Richtung beweglich an dem Oberwerkzeug 14 gelagert. Ferner sind die vier Schieber 16A bis 16D jeweils durch eine Feder 24A bis 24D an dem Oberwerkzeug 14 elastisch vorgespannt.

Auch weisen die Schieber 16A bis 16D jeweils eine vertikal durchgehende Ausnehmung 54 auf.

An dem Unterwerkzeug 12 sind Stößel 56 befestigt, die gegenüber einer Fläche nach oben vorstehen, auf der die Schieber 16 aufliegen, wenn der Formhohlraum 20' geschlossen ist. Dieser Zustand ist in Figur 5 dargestellt.

Die Stößel 56 gehen durch die Ausnehmungen 54 hindurch und erstrecken sich bis leicht über eine Oberseite der jeweiligen Schieber 16. In horizontaler Richtung berühren die Stößel 56 die Schieber 16 jedoch nicht. Demzufolge ist in dem in Figur 5 gezeigten Zustand gewährleistet, dass die Schieber 16 unbehindert durch die Stößel 56 von ihren Federn 24 elastisch an ein eingelegtes Sinterwerkstoff-Bauteil 22 angedrückt werden.

In horizontaler Richtung ausgerichtet mit den Stößeln 56 sind an dem Oberwerkzeug 14 Steuerzapfen 58A bis 58D gelagert (in Figur 5 sind nur die Steuerzapfen 58A und 58B dargestellt). Die Steuerzapfen 58 sind in vertikaler Richtung mittels geeigneter Federn 60A bis 60D in Richtung hin zu dem Unterwerkzeug 12 vorgespannt. Die Steuerzapfen 58 sind dabei in vertikalen Führungen des Oberwerkzeuges 14 verschieblich gegenüber dem Oberwerkzeug 14 gelagert. Durch die Vorspannung der Federn 60 liegen die Steuerzapfen 58 auf den Stößeln 56 auf. Die Steuerzapfen 58 berühren jedoch in der in Figur 5 dargestellten Spritzgussposition die Schieber 16 nicht.

In der in Figur 5 dargestellten Spritzgussposition ist ferner durch eine nicht dargestellte Anpresskraft des Oberwerkzeuges 14 in Bezug auf das Unterwerkzeug 12 gewährleistet, dass die Schieber 16A bis 16D in ihrer Lage fixiert sind, und zwar in der Lage, in der sie elastisch an ein Sinterwerkstoff-Bauteil 22 angedrückt worden sind, bevor ihre Lage fixiert worden ist.

In der in Figur 5 dargestellten Spritzgussposition kann demzufolge ein Spritzgussvorgang erfolgen, bei dem Kunststoff im Spritzgussverfahren über einen (nicht dargestellten) Kanal in den Formhohlraum 20' eingespritzt wird. Der dabei auftretende Betriebsdruck stützt sich über die Außenwandung des Sinterwerkstoff-Bauteiles 22 an den lagefixierten Schiebern 16A bis 16D in radialer (horizontaler) Richtung ab.

In den Figuren 7 und 8 ist ergänzend gezeigt, wie die Schieber 16 mit den Steuerzapfen 58 zusammenwirken, wenn die Spritzgussvorrichtung 30 von einem geöffneten in einen geschlossenen Zustand überführt wird. Im Folgenden wird der Vorgang lediglich eines Schiebers 16 erklärt, obgleich der beschriebene Vorgang zeitgleich bei allen vier Schiebern 16A bis 16D stattfindet.

Im geöffneten Zustand der Spritzgussvorrichtung 50, wenn also das Oberwerkzeug 14 gegenüber dem Unterwerkzeug 12 abgehoben ist, ist der Steuerzapfen 58 in die Ausnehmung 54 des Schiebers 16 eingedrungen.

An der radial außen liegenden Fläche der Ausnehmung 54 ist eine abgeschrägte Steuerfläche 62 vorgesehen. Die Steuerfläche endet in einer im vertikal mittleren Bereich der Ausnehmung 54 liegenden Steuerkante 64. Die Ausnehmung 54 ist unterhalb der Steuerkante 64 abgesetzt.

An der der Steuerfläche 62 zugewandten Seite ist der Steuerzapfen 58 mit einer entsprechenden abgeschrägten Steuerfläche 66 versehen. In der Steuerfläche 66 ist eine Ausnehmung ausgebildet, so dass eine Rastnase 68 gebildet ist. In dem in Figur 7 dargestellten Zustand hintergreift die Rastnase 68 die Steuerkante 64 des Schiebers 16. Demzufolge ist der Schieber 16 in einer zurückgesetzten Position verrastet. Demzufolge wird der Schieber 16 an dem Oberwerkzeug 14 in der zurückgezogenen Position verankert. Die zurückgezogene Position ist gegenüber der Spritzgussposition wie sie in Figur 5 gezeigt ist, um einen Abstand A radial bzw. in horizontaler Richtung versetzt.

Das Oberwerkzeug 14 kann soweit abgehoben werden, dass die Stirnkante des Steuerzapfens 58 sich von der gegenüberliegenden Stirnkante des Stößels 56 löst. Das Oberwerkzeug 14 wird auf das Unterwerkzeug 12 abgesenkt, wie es durch einen Pfeil 78 dargestellt ist. Dabei stößt der Steuerzapfen 58 zu einem bestimmten Zeitpunkt auf den Stößel 56 (vgl. Figur 7). Bei weiterem Hub in Richtung 78 wird die Rastung von Rastnase 68 und Steuerkante 64 mittels des Stößels 56 gelöst. Aufgrund der Feder 60 ist der Steuerzapfen 58 jedoch generell in Anlage an dem Stößel 56. Bei weiterem Absenken wird der Steuerzapfen 58 mehr und mehr aus der Ausnehmung 54 verdrängt. Dabei drückt die Feder 24 den Schieber 16 radial nach innen (Andruckkraft 26 in Figur 8). Hierdurch kommen die Steuerflächen 62 und 66 in Anlage. Aufgrund der Abschrägung wird hierbei der Schieber 16 allmählich radial (horizontal) nach innen auf den Formhohlraum 20' zu bewegt. Sobald der Stößel 56 den Steuerzapfen 58 vollkommen aus der Ausnehmung 54 verdrängt hat, löst sich der Schieber 16 von dem Steuerzapfen 58 und wird allein aufgrund der Andruckkraft 26 auf ein in den Formhohlraum 20 eingelegtes Sinterwerkstoff-Bauteil 22 angedrückt.

Beim Öffnen der Spritzgussvorrichtung 50 (Pfeil 76 in Figur 5) erfolgt die Relativbewegung von Steuerzapfen 58 und Schieber 16 in umgekehrter Reihenfolge. Aufgrund der Andruckkraft der Feder 60 wird der Steuerzapfen 58 in die Ausnehmung 54 hineingedrückt und bewegt aufgrund der Anlage der Steuerfläche 66 an der Steuerfläche 62 den Schieber 16 radial nach außen, bis schließlich die Rastung von Rastnase 68 und Steuerkante 64 erzielt ist.

In Figur 5 ist ferner dargestellt, dass in dem Unterwerkzeug 12 unterhalb der jeweiligen Schieber 16A bis 16D jeweils ein Einsatz aus einem anderen Material eingesetzt ist, der generell mit der Bezugsziffer 70 versehen ist. Der Einsatz 70 ist aus einem Material (z.B. Metall) hergestellt, das elastischer ausgebildet ist als das Material der Werkzeuge 12, 14. Hierdurch wird erreicht, dass die Schieber 16 beim Zusammendrücken von Oberwerkzeug 14 auf Unterwerkzeug 12 mit einer gewissen Elastizität zusammengedrückt werden. Hierdurch werden Spannungsüberhöhungen vermieden. Das Material des Einsatzes 70 kann beispielsweise eine Elastizität wie Kupfer aufweisen.

In dem Oberwerkzeug 14 ist ferner ein Zentraleinsatz 72 vorgesehen, der den Formhohlraum 22' von der Oberseite her begrenzt. Der Zentraleinsatz 72 kann aus ähnlichen Gründen aus einem anderen Material hergestellt sein als die Werkzeuge 12, 14.

In Figur 5 ist ferner dargestellt, dass ein Auswerfer 74 durch das Oberwerkzeug 14 hindurchgeführt werden kann, um das gebildete Verbundbauteil auf das Unterwerkzeug 12 zu drücken und daran zu halten, während das Oberwerkzeug 14 nach einem Spritzgussvorgang angehoben wird.

## Patentansprüche

1. Verfahren zum Herstellen eines Sinterwerkstoff/Kunststoff-Verbundbauteiles mit den Schritten:
- Einlegen eines Sinterwerkstoff-Bauteiles (22) in eine Spritzgussvorrichtung (10; 50), die ein Unterwerkzeug (12), ein Oberwerkzeug (14) und wenigstens einen Schieber (16) aufweist,
- elastisches Andrücken des Schiebers (16) an das eingelegte Sinterwerkstoff-Bauteil (22),
- Zusammenfahren von Unterwerkzeug (12) und Oberwerkzeug (14), wobei der elastisch angedrückte Schieber (16) dazwischen eingeklemmt wird, um die Position des Schiebers (16) zu fixieren, und wobei ein Formhohlraum (20) gebildet wird, in dem das Sinterwerkstoff-Bauteil (22) angeordnet ist, und
- Einspritzen von Kunststoff in den Formhohlraum (20), so dass das Sinterwerkstoff/Kunststoff-Verbundbauteil gebildet wird.

2. Verfahren nach Anspruch 1, wobei der Schieber (16) während des elastischen Andrückvorganges bis zur Kontaktierung des Sinterwerkstoff-Bauteiles (22) oder bis kurz davor durch eine Steuerfläche (66) geführt wird, so dass der Schieber (16) mit einer geringen Geschwindigkeit an das eingelegte Sinterwerkstoff-Bauteil (22) herangeführt wird.

3. Verfahren nach Anspruch 2, wobei das langsame Heranfahren des Schiebers (16) gleichzeitig mit dem Zusammenfahren von Unterwerkzeug (12) und Oberwerkzeug (14) erfolgt.

4. Verfahren nach einem der Ansprüche 1 bis 3, wobei der Schieber (16) vor dem Einlegen des Sinterwerkstoff-Bauteiles (22) in einer zurückgezogenen Position eingerastet gehalten wird.

5. Verfahren nach einem der Ansprüche 1 bis 4, wobei der Schieber (16) von Oberwerkzeug (14) oder Unterwerkzeug gegen einen Abschnitt (70) des anderen Werkzeuges (12) gepresst wird.

6. Verfahren nach Anspruch 5, wobei der Gegenabschnitt (70) durch einen an dem betreffenden Werkzeug (12) festgelegten Einsatz (70) aus einem elastischeren Material als das Material des Oberwerkzeuges (14) bzw. des Unterwerkzeuges (12) gebildet ist.

7. Verfahren nach Anspruch 5 oder 6, wobei die Materialpaarung von Gegenabschnitt (70) und Schieber (16) so gewählt ist, dass eine hohe Haftreibung erzielt wird.

8. Verfahren nach einem der Ansprüche 5 bis 7, wobei der Gegenabschnitt (70) unter einem Winkel (α) kleiner 10°, insbesondere kleiner 7°, in Richtung hin zu dem Formhohlraum (20) geneigt ist und der Schieber (16) an seiner entsprechenden Anlagefläche entsprechend schräg ausgebildet ist.

9. Verfahren nach einem der Ansprüche 1 bis 8, wobei der Schieber (16) an dem einen (14) der zwei Werkzeuge (12, 14) verschieblich gelagert ist.

10. Verfahren nach einem der Ansprüche 1 bis 9, wobei der Schieber (16) eine Ausnehmung (54) aufweist, durch die hindurch ein Steuerzapfen (58) führbar ist.

11. Verfahren nach Anspruch 10, wobei eine Relativbewegung zwischen dem Steuerzapfen (58) und dem Schieber (16) in Abhängigkeit von der Relativbewegung zwischen Oberwerkzeug (14) und Unterwerkzeug (12) erfolgt.

12. Verfahren nach Anspruch 10 oder 11, wobei der Steuerzapfen (58) elastisch vorgespannt ist und beim Zusammenfahren der Werkzeuge (12, 14) von einem Stößel (56) gegen die Vorspannrichtung verschoben wird.

13. Verfahren nach einem der Ansprüche 10 bis 12, wobei der Schieber (16) in einer zurückgezogenen Position durch einen Rasteingriff des Steuerzapfens (58) an einer Kante (64) der Ausnehmung (54) gehalten wird.

14. Verfahren nach einem der Ansprüche 10 bis 13, wobei die Geschwindigkeit des Einfahrens des Schiebers (16) in Richtung hin zum Formhohlraum (20) durch eine Steuerfläche (66) des Steuerzapfens (58) eingerichtet ist.

15. Verfahren nach einem der Ansprüche 1 bis 14, wobei der Formhohlraum (20) zur Bildung des Sinterwerkstoff/Kunststoff-Verbundbauteils in seitlicher Richtung durch eine Mehrzahl von Schiebern (16A bis 16D) definiert wird, die sämtlich elastisch in Richtung hin zu dem Formhohlraum (20) vorgespannt sind.

16. Vorrichtung (10; 50) zur Herstellung eines Sinterwerkstoff/ Kunststoff-Verbundbauteiles, insbesondere zur Durchführung des Verfahrens nach einem der Ansprüche 1 bis 15, mit einem Unterwerkzeug (12), einem Oberwerkzeug (14) und wenigstens einem Schieber (16), die gemeinsam einen Formhohlraum (20) zum Einlegen eines Sinterwerkstoff-Bauteiles (22) definieren,
**dadurch gekennzeichnet, dass**
die Vorrichtung (10; 50) eine Spritzgussvorrichtung (10; 50) ist, wobei der Schieber (16) in Richtung hin zu dem Formhohlraum (20) elastisch vorgespannt, und in Bezug auf das Unter- und das Oberwerkzeug (12, 14) so gelagert ist, dass die Lage des Schiebers (16) anliegend an dem Sinterwerkstoff-Bauteil (22) durch Zusammendrücken der Werkzeuge (12, 14) fixiert werden kann.
